# EUROPÄISCHE PATENTSCHRIFT

(11) **EP 3 705 812 B1**
(45) Veröffentlichungstag und Bekanntmachung des Hinweises auf die Patenterteilung: **09.08.2023**
(21) Anmeldenummer: 20401016.9
(22) Anmeldetag: 06.03.2020
(51) Int. Cl.: F25B 49/02, F25B 30/02, F25B 41/00, F25B 41/40

(54) **LUFT-WASSER-WÄRMEPUMPE**
AIR / WATER HEAT PUMP
POMPE À CHALEUR AIR-EAU

(30) Priorität: 08.03.2019 DE 102019001630
(43) Veröffentlichungstag der Anmeldung: 09.09.2020
(73) Patentinhaber: Stiebel Eltron GmbH & Co. KG, 37603 Holzminden (DE)
(72) Erfinder: HESS, Michael, 37671 Höxter (DE); DELL, Roman, 37603 Holzminden (DE); HAUPT, Simon, 31785 Hameln (DE); REISICH, Sergej, 77933 Lahr (DE)

(56) Entgegenhaltungen:
- EP-A1- 3 336 453
- DE-A1- 3 303 125
- DE-A1-102009 057 481
- DE-U1- 7 710 968
- JP-A- 2002 098 346

## Beschreibung

Die vorliegende Erfindung betrifft ein Luft-Wasser-Wärmepumpe.

Bei Luft-Wasser-Wärmepumpen, insbesondere bei innen aufgestellten Luft-Wasser-Wärmepumpen, ergeben sich durch die vermehrte Verwendung von leicht entzündlichen, brennbaren und/oder gesundheitsbeeinträchtigenden Kältemitteln neue Anforderungen an die Sicherheit der Anlagen. Insbesondere muss vermieden werden, dass derartige Kältemittel in den Aufstellraum der Luft-Wasser-Wärmepumpe austreten. Der Aufstellraum kann beispielsweise ein Heizungsraum, aber auch ein Hauswirtschaftsraum oder ein Kellerraum sein.

Kommt es zu einem Fehlerfall, das heißt, dass Kältemittel aus dem Kältemittelkreis der Luft-Wasser-Wärmepumpe austritt, muss dieses in einen unkritischen Bereich, beispielsweise außerhalb des Gebäudes oder des Aufstellraums, transportiert werden. Alternativ muss der Aufstellraum ein bestimmtes Mindestvolumen überschreiten, was üblicherweise in der Praxis an den wesentlich zu kleinen Aufstellräumen scheitert.

Ein Ausströmen von Kältemittel kann beispielsweise dadurch geschehen, dass der Verflüssiger des Kältekreises auffriert und Kältemittel dadurch in den hydraulischen Kreis gelangt. Ein Druckanstieg lässt daraufhin das Sicherheitsventil ansprechen, so dass das Wasser und im Fehlerfall auch das darin enthaltene Kältemittel in einen Siphon im Aufstellraum geleitet wird und in die Umgebung geraten kann.

EP 3 336 453 A1 offenbart eine Inneneinheit für eine Wärmepumpennutzungsvorrichtung, wobei die Inneneinheit ein Teil der Wärmepumpennutzungsvorrichtung ist, die einen Kältemittelkreislauf umfasst, der eingerichtet ist, um Kältemittel zu zirkulieren, wobei die Inneneinheit einen Wärmemediumkreislauf umfasst, der eingerichtet ist, um einem Wärmemedium zu ermöglichen, durch den Wärmemediumkreislauf zu strömen, und wobei die Wärmepumpennutzungsvorrichtung ferner einen Wärmetauscher umfasst, der eingerichtet ist, um Wärme zwischen dem Kältemittel und dem Wärmemedium auszutauschen, wobei die Inneneinheit mit einer Außeneinheit verbindbar ist, die den Kältemittelkreislauf und den Wärmetauscher beherbergt, wobei die Inneneinheit einen Teil des Wärmemediumkreislaufs beherbergt, wobei die Inneneinheit umfasst: eine Druckschutzeinrichtung oder eine Luftspüleinrichtung, die mit dem Wärmemediumkreislauf verbunden ist; gekennzeichnet durch eine Ein-/Ausschalteinrichtung, die vorgesehen ist, zwischen dem Wärmemediumkreislauf und der Druckschutzeinrichtung oder der Luftspüleinrichtung angeordnet zu werden, die mit dem Wärmemediumkreislauf verbunden ist; und eine Steuerung, die eingerichtet ist, um die Ein-/Ausschalteinrichtung zu steuern, wobei die Steuerung eingerichtet ist, um die Ein-/Ausschalteinrichtung auf Grundlage von Informationen, die von der Außeneinheit erworben werden, zu öffnen und zu schließen.

DE 33 03 125 A1 betrifft eine Luft/Wasser-Wärmepumpe, entsprechend dem Oberbegriff des unabhängigen Anspruchs 1, die kompakt aufgebaut sein undsich zur Innen- und zur Außenaufstellung eignen soll. Es ist hierfür in dem Gehäuse der Wärmepumpe ein unterer Montageraum und ein oberer Montageraum ausgebildet. Im unteren Montageraum sind der Verdichter, der Verflüssiger und ein Schaltkasten angeordnet. Im oberen Montageraum sind der Verdampfer, der Lüfter und eine Luftführung vorgesehen. Getrennt sind beide Montageräume durch eine Abtauwanne. Oben am oberen Montageraum sind eine Ausblasöffnung und eine Ansaugöffnung ausgebildet. Auf den oberen Montageraum ist ein an die Innenaufstellung bzw. Außenaufstellung angepaßtes Kopfteil aufgesetzt.

Vor diesem Hintergrund war es eine Aufgabe der vorliegenden Erfindung, eine Luft-Wasser-Wärmepumpe anzugeben, die bei leicht entzündlichen, brennbaren und/oder gesundheitsbeeinträchtigenden Kältemitteln einen sicheren Betrieb ermöglicht.

Die Aufgabe wird erfindungsgemäß durch die nebengeordneten Ansprüche gelöst. Bevorzugte Ausgestaltungen werden in den Unteransprüchen angegeben.

In einer Ausführung wird eine Luft-Wasser-Wärmepumpe vorgeschlagen, welche als innenaufgestellte Luft-Wasser-Wärmepumpe zur Aufstellung in einem Aufstellraum ausgebildet ist, die aufweist a) einen Kältemittelkreis, b) einen Hydraulikkreis, c) einen zu dem Aufstellraum nach außen abgedichteten Raum, genannt Verdampferraum, d) einen weiteren Raum, genannt Kältemittelraum, e) einen Verdampfer, der Teil des Kältemittelkreises ist, f) einen Lüfter, der dazu eingerichtet ist, Luft über den Verdampfer zu führen, g) einen Verflüssiger, der Teil des Kältemittelkreises ist, h) einen Kompressor, der Teil des Kältemittelkreises ist, wobei der Hydraulikkreis den Verflüssiger umfasst und i) ein Sicherheitsventil, das in dem Hydraulikkreis dem Verflüssiger nachgelagert angeordnet ist. Der Verflüssiger und der Kompressor sind in dem Kältemittelraum angeordnet. Die Luft-Wasser-Wärmepumpe umfasst einen an den Lüfter angrenzenden Luftkanal, welcher dazu ausgebildet ist, dass der Lüfter Luft aus dem Verdampferraum nach außerhalb des Aufstellraums befördert. Der Verdampfer und der Lüfter sind in dem Verdampferraum angeordnet. Die Luft-Wasser-Wärmepumpe weist eine hydraulische Verbindung zwischen Sicherheitsventil und Verdampferraum auf.

Somit wird das Wasser, beziehungsweise im Fehlerfall zusätzlich dazu Kältemittel, bei einem Ansprechen des Sicherheitsventils nicht aus der Luft-Wasser-Wärmepumpe in den Aufstellraum, sondern in den nach außen abgedichteten Verdampferraum geleitet. Aus diesem kann das Kältemittel mittels des Lüfters aus dem Aufstellraum heraus gefördert werden. Das Kältemittel, das aus der hydraulischen Verbindung ausströmt, ist insbesondere gasförmig. Im Falle einer entsprechenden vertikalen Anordnung ist eine Schwerkraftabscheidung von Wasser und Kältemittel möglich. Das Wasser kann beispielsweise über einen Kondensatanschluss mit Siphon gefahrlos nach außen geleitet werden.

Anders ausgedrückt, anstatt einer Ausleitung nach außen gibt das Sicherheitsventil erfindungsgemäß Wasser und gegebenenfalls Kältemittel in einen geräteinternen Raum, den Verdampferraum, ab, in dem das Kältemittel vom Wasser abgeschieden werden kann und einzeln über verschiedene Öffnungen nach außen leitbar ist.

Vorzugsweise weist die Luft-Wasser-Wärmepumpe weiter eine Abtauwanne auf, wobei die Abtauwanne unterhalb des Verdampfers im Verdampferraum angeordnet ist, wobei die hydraulische Verbindung einen Austritt von Flüssigkeit in die Abtauwanne ermöglicht.

Die Abtauwanne ist sowieso vorgesehen, um an dem Verdampfer abfallendes Kondensat aufzunehmen und nach außen zu leiten. Somit erfährt diese Abtauwanne gemäß dieser bevorzugten Ausführung eine Funktionsintegration, da sie ferner in das Sicherheitssystem des Hydraulikkreises integriert ist und ein unerwünschtes Ausleiten von Kältemittel in den Aufstellraum unterbindet.

Vorzugsweise weist die Abtauwanne einen Kondensatanschluss zum Ausleiten von Flüssigkeit nach außen in den Aufstellraum auf.

Vorzugsweise wirkt die Abtauwanne als Dichtelement zwischen Verdampferraum und dem Verflüssiger, wobei die Abtauwanne insbesondere über ein Verbindungselement, besonders bevorzugt eine Schraube, reversibel montierbar und demontierbar ist.

Die Abtauwanne erfährt demnach eine weitere Funktionsintegration, nämlich die Abdichtung des Verdampferraumes von dem Kälteraum, in dem ein Großteil des Kälteaggregates einschließlich des Verflüssigers angeordnet ist. Die Möglichkeit der reversiblen Montage ermöglicht, dass zu Wartungszwecken einfach auf die darunterliegenden Komponenten und Bauteile zugegriffen werden kann, was die Wartbarkeit verbessert und Wartungen vereinfacht.

Vorzugsweise stellt die hydraulische Verbindung eine Schwerkraftabscheidung von Kältemittel und Wasser bereit. Hierzu weist die hydraulische Verbindung vorzugsweise eine entsprechende vertikale Anordnung auf.

Vorzugsweise weist die Luft-Wasser-Wärmepumpe eine Steuerung auf. Die Steuerung ist dazu ausgebildet, den Lüfter permanent zu betreiben.

So wird demnach der Lüfter, der in einer Luft-Wasser-Wärmepumpe bekanntermaßen vorhanden ist, um Luft über den Verdampfer zu führen, eingesetzt, um gleichzeitig eine permanente Ausleitung eventuell austretenden Kältemittels, insbesondere aus der hydraulischen Verbindung austretenden Kältemittels, zu gewährleisten. Hierzu wird die Steuerung, die bislang beispielsweise in einem Fall, in dem die Luft-Wasser-Wärmepumpe nicht betrieben wird, den Lüfter ausgeschaltet hat, derart modifiziert, dass der Lüfter permanent betrieben wird. Die erfindungsgemäße Luft-Wasser-Wärmepumpe erfordert demnach keine zusätzlichen Bauteile, wie beispielsweise zusätzliche Lüfter, Sensoren oder Überwachungsinstrumente und ermöglicht ein Sicherheitskonzept, das vermeidet, dass entzündliches, brennbares und/oder gesundheitsbeeinträchtigendes Kältemittel in einen Aufstellraum der Luft-Wasser-Wärmepumpe austritt.

In einer Ausführung ist e Steuerung dazu ausgebildet, den Lüfter auch dann zu betreiben, wenn die Luft-Wasser-Wärmepumpe keine Umgebungsenergie aufnimmt, insbesondere auch dann, wenn ein Kompressor der Luft-Wasser-Wärmepumpe nicht betrieben wird und/oder sich die Luft-Wasser-Wärmepumpe in einem ausgeschalteten Betriebszustand befindet.

In einer Ausführung weist die Luft-Wasser-Wärmepumpe ferner eine Sicherheitseinheit auf, wobei die Sicherheitseinheit dazu ausgebildet ist, eine Drehzahl des Lüfters zu überwachen.

Herkömmlich ist bekannt, das Ausströmen von Kältemittel mittels Druckdosen zu überwachen. Indem die erfindungsgemäße Sicherheitseinheit die Drehzahl des Lüfters überwacht, kann auf das zusätzliche Vorsehen der Druckdose verzichtet werden. Dadurch wird die Luft-Wasser-Wärmepumpe strukturell vereinfacht und in der Komplexität reduziert. Solange der Lüfter läuft, das heißt, solange die Sicherheitseinheit eine Drehzahl des Lüfters feststellt, ist die Sicherheit der Luft-Wasser-Wärmepumpe gewährleistet, da mit dem laufenden Lüfter ein Abtransport von eventuell austretendem Kältemittel sichergestellt ist. Die Sicherheitseinheit kann beispielsweise im Fehlerfall, das heißt, wenn die Drehzahl des Lüfters gleich null ist oder anderweitig von der erwarteten Größe abweicht, ein Signal an eine weitere Einheit ausgeben, sodass die Wartung der Luft-Wasser-Wärmepumpe vorgenommen werden kann. Für die Übertragung dieses Signals sind keine Grenzen gesetzt. Das Signal kann beispielsweise drahtgebunden oder drahtlos an ein Bedienelement der Luft-Wasser-Wärmepumpe selbst oder auch direkt und/oder über einen Server an ein mobiles Endgerät wie ein Smartphone übersandt werden.

In einer Ausführung weist die Luft-Wasser-Wärmepumpe neben dem Verdampferraum einen Kälteraum auf, wobei der Verdampfer und der Lüfter in dem Verdampferraum und ein Kompressor und ein Verflüssiger in dem Kälteraum angeordnet ist, wobei eine Verbindung zwischen Kälteraum und Verdampferraum besteht, derart, dass durch den Betrieb des Lüfters ein permanenter Unterdruck in dem Kälteraum aufrechterhalten wird.

Durch den permanenten Unterdruck in dem Kälteraum ist sichergestellt, dass die Ausleitung eventuell austretenden Kältemittels, d.h. auch an sonstigen Stellen des Kältekreises austretendes Kältemittel, durch den Lüfter und nicht durch andere Öffnungen des Kälteraumes zu dem Aufstellraum gewährleistet ist. Der Kälteraum muss entsprechend abgedichtet sein, damit es zu dem Unterdruck kommen kann. Vorzugsweise ist die Verbindung zwischen Kälteraum und Verdampferraum die einzige Öffnung des Kälteraumes nach außen.

In einer Ausführung ist die Steuerung dazu ausgebildet, eine Drehzahl des Lüfters abzusenken, wenn sich die Luft-Wasser-Wärmepumpe in einem ausgeschalteten Betriebszustand befindet.

Indem die Drehzahl des Lüfters in dem ausgeschalteten Betriebszustand der Luft-Wasser-Wärmepumpe abgesenkt wird, reduziert sich die Bereitschaftsleistungsaufnahme der Luft-Wasser-Wärmepumpe auf einen niedrigen Wert. Beispielsweise kann eine Leistungsaufnahme im Bereitschaftsfall, das heißt, in einem Fall, in dem die Wärmepumpe ausgeschaltet ist, auf unter 4 Watt gehalten werden, wobei dies den Betrieb des Lüfters und vorzugsweise auch die Leistungsaufnahme von Leistungselektronik, wie Invertern, einschließt.

In einer Ausführung umfasst der Kältemittelkreis ein entzündliches, brennbares und/oder gesundheitsbeeinträchtigendes Kältemittel. Bei der Verwendung derartiger Kältemittel ist das erfindungsgemäß erarbeitete Sicherheitskonzept besonders vorteilhaft. Es wird eine sichere Ausleitung des Kältemittels auch dann gewährleistet, wenn dieses aus dem Kältemittelkreis austritt. Vorzugsweise umfasst das Kältemittel R454C, wobei auch die Verwendung anderer Kältemittel möglich ist.

Weitere Vorteile und bevorzugte Ausgestaltungen werden nachfolgend mit Verweis auf die beigefügten Figuren beschrieben. Hierbei zeigen:
- Fig. 1: schematisch und exemplarisch eine Seitenansicht einer Luft-Wasser-Wärmepumpe und
- Fig. 2: schematisch und exemplarisch eine perspektivische Ansicht der Luft-Wasser-Wärmepumpe aus Fig. 1.

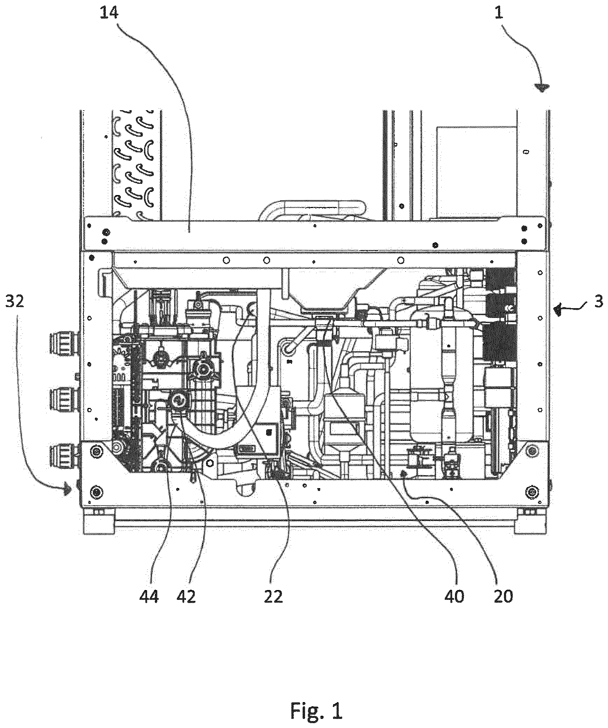

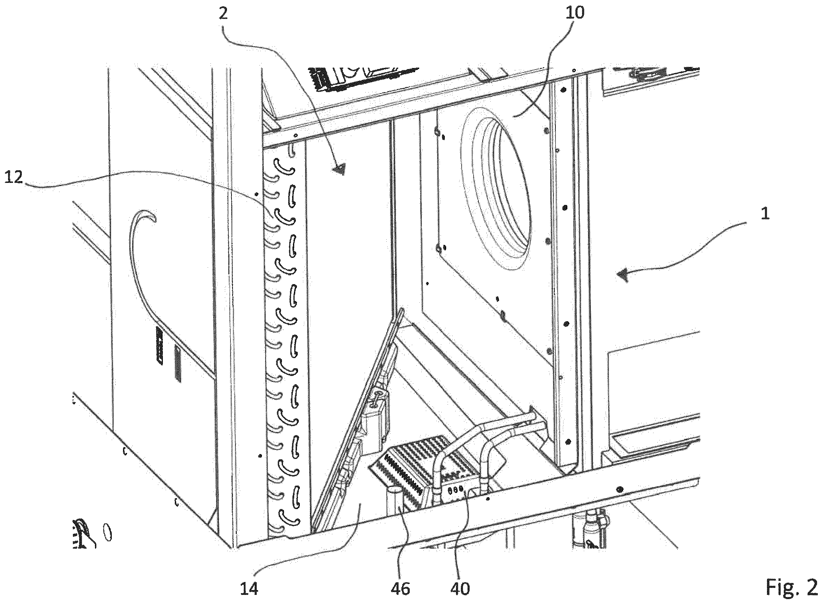

Fig. 1 zeigt schematisch und exemplarisch eine Seitenansicht einer erfindungsgemäßen Luft-Wasser-Wärmepumpe 1. Die Luft-Wasser-Wärmepumpe 1 ist nicht vollständig, sondern auszugsweise gezeigt, insbesondere ist in Fig. 1 nur die Seitenansicht eines unteren Kälteraumes 3 gezeigt, wobei ein darüber angeordneter Verdampferraum 2 in der perspektivischen Ansicht, die in Fig. 2 gezeigt ist, sichtbar ist.

In Fig. 2 ist, wie oben erwähnt, eine perspektivische Ansicht der Luft-Wasser-Wärmepumpe 1 gezeigt, wobei insbesondere der Verdampferraum 2 zu sehen ist. In dem Verdampferraum ist ein Lüfter 10, der dazu eingerichtet ist, Luft über einen Verdampfer 12 zu führen angeordnet. Unterhalb des Verdampferraumes 2 befindet sich ein Kälteraum 3, der nachfolgend mit Verweis auf Fig. 2 detailliert beschrieben wird.

Der Lüfter 10 ist vorzugsweise dazu ausgebildet, Luft über einen nicht gezeigten Kanal aus dem Aufstellraum, der beispielsweise ein Heizungsraum, ein Hauswirtschaftsraum oder ein Kellerraum sein kann, nach außen zu leiten.

Der Verdampfer 12 ist Teil des Kältemittelkreises, wobei die wesentlichen verbleibenden Komponenten des Kältemittelkreises in dem Kälteraum 3 angeordnet sind (vgl. Fig. 1).

Wie erwähnt ist die Luft-Wasser-Wärmepumpe 1 in die zwei Räume, den Verdampferraum 2 und den Kälteraum 3, aufgeteilt, wobei im Wesentlichen eine Abtauwanne 14, die zur Aufnahme von Kondensat beim Abtauen des Verdampfers 12 ausgebildet ist, die Trennung der beiden Räume definiert. Ein Betrieb des Lüfters 10 transportiert Kältemittel, beispielsweise entzündliches, brennbares und/oder gesundheitsbeeinträchtigendes Kältemittel wie R454C, das im Fehlerfall austritt, zuverlässig aus dem abgedichteten Gerät in einen unkritischen Bereich beispielsweise außerhalb des Gebäudes.

Zurück zu Fig. 1, in der der Kälteraum 3 ohne eine vordere Abdeckung gezeigt ist, sodass die inneren Komponenten sichtbar sind. Der Kältemittelkreis ist schematisch mit dem Bezugszeichen 20 gekennzeichnet und umfasst beispielsweise einen Kompressor und einen Verflüssiger 22. Im Bereich des Kälteraumes 3 sind an der Außenseite der Luft-Wasser-Wärmepumpe Anschlüsse 32 vorgesehen, die einen Anschluss der Luft-Wasser-Wärmepumpe 1 an eine Stromversorgung und/oder Heizkreise bzw. Brauchwasserkreise ermöglichen. Auch die Kondensat- bzw. Abtauwanne 14 ist gut erkennbar. An die Abtauwanne 14 schließt sich ein Kondensatanschluss 40 mit Siphon an, der Kondensat aus dem Gehäuse nach außen leitet.

Im Vorlauf des Hydraulikkreises der Luft-Wasser-Wärmepumpe 1 nach dem Verflüssiger 22 ist ein Sicherheitsventil 42 angeordnet, das auslöst, wenn der Druck in dem Hydraulickreis ansteigt. Bei Auslösung wird Fluid aus dem Hydraulikkreis über eine hydraulische Leitung 44 in den Verdampferraum 2 geleitet. Über einen Austritt 46, der eine Schwerkraftabscheidung von Kältemittel und Wasser ermöglicht, entleert sich das Sicherheitsventil 42 also in den Verdampferraum 2. Das Wasser wird in der Abtauwanne 14 gesammelt und über den Kondensatanschluss 40 ausgeleitet. Gasförmiges Kältemittel wird hiervon durch die Schwerkraft abgeschieden und über den Lüfter 10 aus dem abgedichteten Gehäuse und aus dem Aufstellraum gefördert.

Somit wird ein durch eine in den Fig. 1 und 2 nicht gezeigte Steuerung der Luft-Wasser-Wärmepumpe 1 betriebener Lüfter 10 zur Abfuhr von Kältemittel an die Außenluft vorgeschlagen. Das Absaugkonzept deckt jeden Teil des Kältemittelkreises 20 ab, sodass gegebenenfalls austretendes Kältemittel von jeder Position zuverlässig nach außen geführt werden kann. Insbesondere kann durch die beispielhaft gezeigte Ausgestaltung des Sicherheitsventils 42 auch eventuell in den Hydraulikkreis austretendes Kältemittel sicher aus dem Aufstellraum befördert werden. Das Sicherheitsventil 42 ist bei Wärmepumpen bekannt, die erfindungsgemäß besonders vorteilhafte Modifikation betrifft den hydraulischen Anschluss an dieses Sicherheitsventil.

Es ist besonders vorteilhaft, den Lüfter 10 dann, wenn die Wärmepumpe keine Wärme erzeugt, mit geringerer Drehzahl zu betreiben, um die Bereitschaftsverluste zu minimieren. Da die Drehzahl des Lüfters 10 überwacht wird, ist keine extra Druckdose zum Erkennen von austretendem Kältemittel nötig. Schließlich wird dadurch, dass der Lüfter 10, der sowieso Teil einer Luft-Wasser-Wärmepumpe 1 ist, durch eine weitere Funktion ergänzt wird, die Funktionsintegration erhöht und die Komplexität der Luft-Wasser-Wärmepumpe 1 als Ganzes verringert.

## Patentansprüche

1. Luft-Wasser-Wärmepumpe (1), welche als innenaufgestellte Luft-Wasser-Wärmepumpe zur Aufstellung in einem Aufstellraum ausgebildet ist, die aufweist
- einen Kältemittelkreis (20),
- einen Hydraulikkreis,
- einen zu dem Aufstellraum nach außen abgedichteten Raum, genannt Verdampferraum (2),
- einen weiteren Raum, genannt Kältemittelraum,
- einen Verdampfer (12), der Teil des Kältemittelkreises ist,
- einen Lüfter (10), der dazu eingerichtet ist, Luft über den Verdampfer (12) zu führen,
- einen Verflüssiger (22), der Teil des Kältemittelkreises ist,
- einen Kompressor, der Teil des Kältemittelkreises ist,
wobei der Hydraulikkreis den Verflüssiger umfasst,
wobei der Verdampfer (12) und der Lüfter (10) in dem Verdampferraum (2) angeordnet sind,
wobei der Verflüssiger (22) und der Kompressor in dem Kältemittelraum angeordnet sind,
wobei die Luft-Wasser-Wärmepumpe (1) einen an den Lüfter angrenzenden Luftkanal umfasst, welcher dazu ausgebildet ist, dass der Lüfter Luft aus dem Verdampferraum nach außerhalb des Aufstellraums befördert,
**dadurch gekennzeichnet, dass** die Luft-Wasser-Wärmepumpe (1)
ein Sicherheitsventil (42) umfasst, das in dem Hydraulikkreis dem Verflüssiger (22) nachgelagert angeordnet ist, und
eine hydraulische Verbindung (44) zwischen dem Sicherheitsventil (42) und dem Verdampferraum (2) aufweist.

2. Luft-Wasser-Wärmepumpe (1) nach Anspruch 1, die weiter eine Abtauwanne (14) aufweist, wobei die Abtauwanne (14) unterhalb des Verdampfers (12) im Verdampferraum (2) angeordnet ist, wobei die hydraulische Verbindung (44) einen Austritt (46) von Flüssigkeit in die Abtauwanne ermöglicht.

3. Luft-Wasser-Wärmepumpe (1) nach Anspruch 2, wobei die Abtauwanne (14) einen Kondensatanschluss (40) zum Ausleiten von Flüssigkeit nach außen in den Aufstellraum aufweist.

4. Luft-Wasser-Wärmepumpe (1) nach Anspruch 2 oder 3, wobei die Abtauwanne (14) als Dichtelement zwischen Verdampferraum (2) und dem Verflüssiger (22) wirkt, wobei die Abtauwanne (14) insbesondere über ein Verbindungselement, besonders bevorzugt eine Schraube, reversibel montierbar und demontierbar ist.

5. Luft-Wasser-Wärmepumpe (1) nach einem der vorstehenden Ansprüche, wobei die hydraulische Verbindung (44) eine Schwerkraftabscheidung von Kältemittel und Wasser bereitstellt.

6. Luft-Wasser-Wärmepumpe (1) nach einem der vorstehenden Ansprüche, die weiter eine Steuerung aufweist, wobei die Steuerung dazu ausgebildet ist, den Lüfter (10) auch dann zu betreiben, wenn die Luft-Wasser-Wärmepumpe (1) keine Umgebungsenergie aufnimmt, insbesondere auch dann, wenn ein Kompressor der Luft-Wasser-Wärmepumpe (1) nicht betrieben wird und/oder sich die Luft-Wasser-Wärmepumpe (1) in einem ausgeschalteten Betriebszustand befindet.

7. Luft-Wasser-Wärmepumpe (1) nach einem der vorstehenden Ansprüche, die ferner eine Sicherheitseinheit aufweist, wobei die Sicherheitseinheit dazu ausgebildet ist, eine Drehzahl des Lüfters (10) zu überwachen.

8. Luft-Wasser-Wärmepumpe (1) nach einem der vorstehenden Ansprüche, die weiter eine Steuerung aufweist, wobei die Steuerung dazu ausgebildet ist, eine Drehzahl des Lüfters (10) abzusenken, wenn sich die Luft-Wasser-Wärmepumpe (1) in einem ausgeschalteten Betriebszustand befindet.

9. Luft-Wasser-Wärmepumpe (1) nach einem der vorstehenden Ansprüche, wobei der Kältemittelkreis (20) ein entzündliches, brennbares und/oder gesundheitsbeeinträchtigendes Kältemittel, insbesondere R454c, umfasst.

10. Luft-Wasser-Wärmepumpe (1) nach einem der vorstehenden Ansprüche, die weiter eine Steuerung aufweist, welche dazu ausgebildet ist, den Lüfter (10) permanent zu betreiben, so dass aus dem Kältemittelkreis (20) austretendes Kältemittel durch den permanenten Betrieb des Lüfters (10) aus dem Aufstellraum ausgeleitet wird.

## Claims

1. Air-water heat pump (1), which is configured as an internally installed air-water heat pump for installation in an installation room, having
- a refrigerant circuit (20),
- a hydraulic circuit,
- a chamber, referred to as evaporator chamber (2), which is sealed off externally from the installation room,
- a further chamber, referred to as refrigerant chamber,
- an evaporator (12), which is part of the refrigerant circuit,
- a fan (10), which is set up to direct air over the evaporator (12),
- a condenser (22), which is part of the refrigerant circuit,
- a compressor, which is part of the refrigerant circuit,
wherein the hydraulic circuit comprises the condenser,
wherein the evaporator (12) and the fan (10) are arranged in the evaporator chamber (2),
wherein the condenser (22) and the compressor are arranged in the refrigerant chamber,
wherein the air-water heat pump (1) comprises an air duct adjacent to the fan, which is configured such that the fan conveys air from the evaporator chamber to outside the installation room,
**characterised in that** the air-water heat pump (1)
comprises a safety valve (42), which is arranged in the hydraulic circuit downstream of the condenser (22), and
has a hydraulic connection (44) between the safety valve (42) and the evaporator chamber (2).

2. Air-water heat pump (1) according to claim 1, which further comprises a defrosting tray (14), wherein the defrosting tray (14) is arranged underneath the evaporator (12) in the evaporator chamber (2), wherein the hydraulic connection (44) allows an outlet (46) of fluid into the defrosting tray.

3. Air-water heat pump (1) according to claim 2, wherein the defrosting tray (14) has a condensate connection (40) for discharging liquid outwards into the installation room.

4. Air-water heat pump (1) according to claim 2 or 3, wherein the defrosting tray (14) acts as a sealing element between the evaporator chamber (2) and the condenser (22), wherein the defrosting tray (14) can be installed and removed reversibly, in particular via a connecting element, particularly preferably a screw.

5. Air-water heat pump (1) according to one of the preceding claims, wherein the hydraulic connection (44) provides a gravity separation of refrigerant and water.

6. Air-water heat pump (1) according to one of the preceding claims, which further comprises a control unit, wherein the control unit is configured to operate the fan (10) even if the air-water heat pump (1) does not absorb any energy from its environment, in particular even if a compressor of the air-water heat pump (1) is not in operation and/or the air-water heat pump (1) is in a switched-off operating state.

7. Air-water heat pump (1) according to one of the preceding claims, which further comprises a safety unit, wherein the safety unit is configured to monitor a rotational speed of the fan (10).

8. Air-water heat pump (1) according to one of the preceding claims, which further comprises a control unit, wherein the control unit is configured to lower a rotational speed of the fan (10) when the air-water heat pump (1) is in a switched-off operating state.

9. Air-water heat pump (1) according to one of the preceding claims, wherein the refrigerant circuit (20) comprises a flammable, combustible and/or health-damaging refrigerant, in particular R454c.

10. Air-water heat pump (1) according to one of the preceding claims, which further comprises a control unit, which is configured to permanently operate the fan (10) such that refrigerant exiting from the refrigerant circuit (20) is discharged from the installation room by the permanent operation of the fan (10).

## Revendications

1. Pompe à chaleur air-eau (1), réalisée sous la forme d'une pompe à chaleur air-eau destinée à être installée à l'intérieur, dans une pièce d'installation, présentant
- un circuit de fluide frigorigène (20),
- un circuit hydraulique,
- un compartiment étanche par rapport à l'extérieur vis-à-vis de la pièce d'installation, dit compartiment d'évaporateur (2),
- un autre compartiment, dit compartiment de fluide frigorigène,
- un évaporateur (12) faisant partie du circuit de fluide frigorigène,
- un ventilateur (10), conçu pour guider de l'air afin qu'il passe par l'évaporateur (12),
- un condenseur (22) faisant partie du circuit de fluide frigorigène,
- un compresseur faisant partie du circuit de fluide frigorigène,
le circuit hydraulique comprenant le condenseur,
l'évaporateur (12) et le ventilateur (10) étant disposés dans le compartiment d'évaporateur (2),
le condenseur (22) et le compresseur étant disposés dans le compartiment de fluide frigorigène,
la pompe à chaleur air-eau (1) comprenant un conduit d'air adjacent au ventilateur et conçu de façon que le ventilateur transporte de l'air issu du compartiment d'évaporateur jusqu'à l'extérieur de la pièce d'installation,
**caractérisée en ce que** la pompe à chaleur air-eau (1)
comprend une soupape de sécurité (42) disposée dans le circuit hydraulique en aval du condenseur (22) et
présente une liaison hydraulique (44) entre la soupape de sécurité (42) et le compartiment d'évaporateur (2).

2. Pompe à chaleur air-eau (1) selon la revendication 1, présentant en outre un bac de dégivrage (14), le bac de dégivrage (14) étant disposé dans le compartiment d'évaporateur (2) sous l'évaporateur (12), la liaison hydraulique (44) permettant une sortie (46) de liquide dans le bac de dégivrage.

3. Pompe à chaleur air-eau (1) selon la revendication 2, dans laquelle le bac de dégivrage (14) présente un raccord pour conduite d'évacuation des condensats (40) pour guider le liquide vers l'extérieur, dans la pièce d'installation.

4. Pompe à chaleur air-eau (1) selon la revendication 2 ou 3, dans laquelle le bac de dégivrage (14) agit comme élément d'étanchéité entre le compartiment d'évaporateur (2) et le condenseur (22), le bac de dégivrage (14) pouvant être monté et démonté de manière réversible en particulier au moyen d'un élément de liaison, de manière particulièrement préférée au moyen d'une vis.

5. Pompe à chaleur air-eau (1) selon l'une quelconque des revendications précédentes, dans laquelle la liaison hydraulique (44) assure une séparation par gravité du fluide frigorigène et de l'eau.

6. Pompe à chaleur air-eau (1) selon l'une quelconque des revendications précédentes, présentant en outre une commande, la commande étant conçue pour faire fonctionner le ventilateur (10) même quand la pompe à chaleur air-eau (1) n'absorbe pas d'énergie de l'environnement, en particulier même quand un compresseur de la pompe à chaleur air-eau (1) n'est pas en fonctionnement et/ou que la pompe à chaleur air-eau (1) se trouve dans un état de fonctionnement arrêté.

7. Pompe à chaleur air-eau (1) selon l'une quelconque des revendications précédentes, présentant en outre une unité de sécurité, l'unité de sécurité étant conçue pour surveiller le régime du ventilateur (10).

8. Pompe à chaleur air-eau (1) selon l'une quelconque des revendications précédentes, présentant en outre une commande, la commande étant conçue pour diminuer le régime du ventilateur (10) quand la pompe à chaleur air-eau (1) se trouve dans un état de fonctionnement arrêté.

9. Pompe à chaleur air-eau (1) selon l'une quelconque des revendications précédentes, dans laquelle le circuit de fluide frigorigène (20) comprend un fluide frigorigène inflammable, combustible et/ou néfaste pour la santé, en particulier du R454c.

10. Pompe à chaleur air-eau (1) selon l'une quelconque des revendications précédentes, présentant en outre une commande conçue pour faire fonctionner le ventilateur (10) en permanence, de telle sorte que du fluide frigorigène s'échappant du circuit de fluide frigorigène (20) est évacué hors de la pièce d'installation sous l'effet du fonctionnement permanent du ventilateur (10).
